# EUROPEAN PATENT APPLICATION

(11) **EP 2 521 384 A1**
(43) Date of publication of application: **07.11.2012**
(21) Application number: 10840503.6
(22) Date of filing: 14.12.2010
(51) Int. Cl.: H04W 4/24

(54) **METHOD, SYSTEM AND DEVICE FOR SENDING CLOSE SUBSCRIBER GROUP INFORMATION**

(30) Priority: 28.12.2009 CN 200910244081
(71) Applicant: China Academy of Telecommunications Technology, Haidian District Beijing 100191 (CN)
(72) Inventor: ZHOU, Yanfei, Beijing 100083 (CN); XIONG, Chunshan, Beijing 100083 (CN); ZHANG, Juan, Beijing 100083 (CN)
(74) Representative: Lantos, Mihaly
(86) International application number: PCT/CN2010/079784
(87) International publication number: WO 2011/079714

(57) **Abstract**

A method, system and device for sending Closed Subscriber Group (CSG) information are disclosed by the embodiments of the present invention, and the method includes the following steps: when CSG information of a User Equipment (UE) changes, a mobility management entity acquires the changed CSG information of the UE; the mobility management entity sends the changed CSG information to a Policy and Charging Rules Function (PCRF) entity, which charges the UE according to the changed CSG information of the UE. In the present invention, the changed CSG information is carried in messages sent from the mobility management entity to a gateway, so that the PCRF can be notified of the changed CSG information. Therefore, the PCRF can charge according to the changed CSG information, and the problem is solved that the CSG information can not be reported to the gateway.

## Description

The present application claims the priority of the Chinese patent application with the application date of December 28, 2009, the application number of 200910244081.9, and the patent name of "method, system and device for sending close subscriber group information", all content of the priority application is combined into the present application by quoting.

### FIELD OF THE PRESENT INVENTION

The present invention relates generally to the field of communication technology, and more particularly a method, system and device for sending close subscriber group (CSG) information.

### BACKGROUND OF THE PRESENT INVENTION

With the variety of telecommunication services needs (such as Multi-Media Call, files downloading, web browsing, streaming media etc.) proposed by users and telecom operators, a large amount of transmission services with differentiated QoS (Quality of Service) is needed to be carried by the network resources. To response the urgent demand of the variety of profit model proposed by telecom operators, and the demand of a large amount of transmission services with differentiated QoS carried by the limited network resources, and to have a good control of those transmission services with differentiated QoS, it is possible to combine Policy Control and Charging Control. With the PCC (Policy and Charging Control) framework, it is possible to meet the demand of different QoS control and charging, then bringing richer user experiences, also bringing new development point to operators.

In PCC framework, location-based charging has been defined, comprising: if a PCRF (Policy and Charging Rules Function) entity decides to charge based on user location, it will set Location change trigger message in PCC Rules and send the Location change trigger message to a PCEF (Policy and Charging Enforcement Function) entity.

In GERAN (GSM/EDGE Radio Access Network)/UTRAN (Universal Terrestrial Radio Access Network), the PCEF function is implemented in GGSN (Gateway GPRS Support Node) ; in EPS (Evolved Packet System), the PCEF function is implemented in PGW (Packet Data Gateway), that is to say, the PCEF function is implemented in GGSN or PGW.

Take GERAN/UTRAN for example, after GGSN receives Location change trigger message, it will set MS (Mobile Station) Info Change Reporting Action IE (Information Element) accordingly, and send that to SGSN, to request the SGSN to report user location change information to the GGSN. So, when SGSN receives user location change information, it reports user location change information to GGSN.

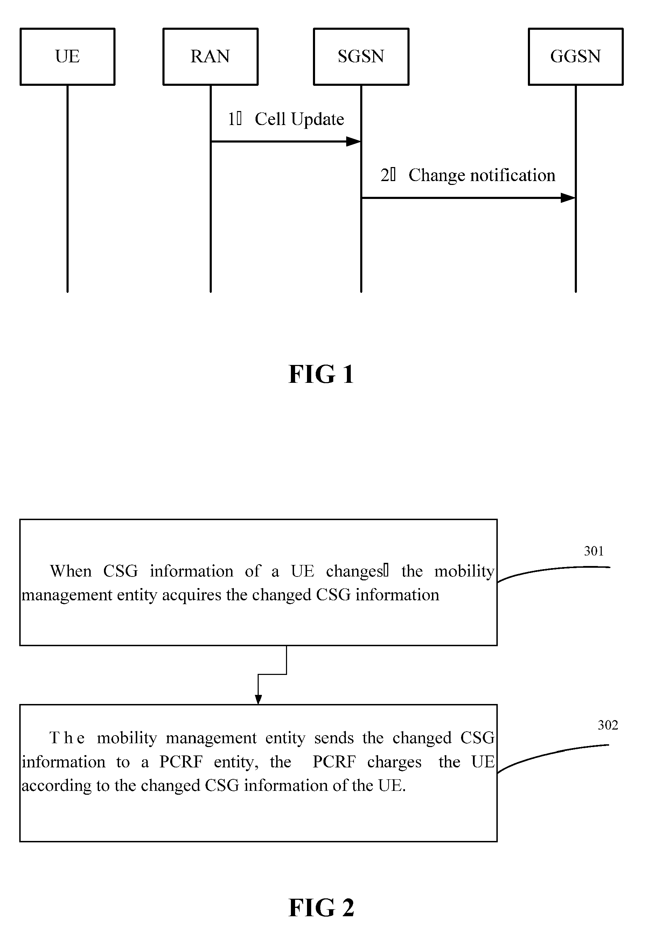

As a reporting procedure shown in Figure 1, when user location changes, namely UE (User Equipment) location changes, the associated RAN (Radio Access Network) will receive UE location change message, and the RAN needs to send message to SGAN. If the RAN is BSS (Base Station Subsystem), the message should be Cell Update message; if the RAN is RNC (Radio Network Controller), the message should be Location Report information, take Cell Update message for example in the figure.

The Cell Update message carries UE location change information. When SGSN receives the Cell Update message, it needs to report the UE location change information to GGSN. Therein, the SGSN reports UE location change information to GGSN by Change Notification Request message, namely that SGSN reports user location change information to GGSN through Change Notification Request message.

During achieving this invention, inventor notices that there are at least following shortcomings among existing technologies:
If H(e)NB are deployed in a network, a charging method base on CSG (Close Subscriber Group) information and CSG Membership has been put forward, however, existing technology does not define the process and message how SGSN sends user CSG information to GGSN (if H(e)NB are not deployed, reports through Change Notification Request message), causing that the GGSN and the PCRF can not receive user's latest CSG information, and affecting charging process.

### SUMMARY OF THE PRESENT INVENTION

The embodiment of the invention discloses a method, system and device for sending CSG information, sending latest CSG information to a PCRF and achieving charging.

For the purpose mentioned above, the embodiment of the invention provides a method for sending CSG information, comprising:
when the CSG information of a UE changes, a mobility management entity acquires the changed CSG information of the UE;
the mobility management entity sends the changed CSG information to a gateway.

The embodiment of the invention provides a method for sending CSG information, comprising:
when the CSG information of a UE changes, a gateway receives the first message from the mobility management entity, the first message carrying the changed CSG information of the UE.

The embodiment of the invention provides a system for sending CSG information, comprising:
a mobility management entity, used to acquire the changed CSG information of a UE when the CSG information of the UE changes, and send the changed CSG information to a gateway;
a gateway, used to receive the first message from the mobility management entity, the first message carrying the changed CSG information of the UE.

The embodiment of the invention provides a device for sending CSG information, comprising:
an acquiring module, used to acquire the changed CSG information of a UE when the CSG information of the UE changes;
a sending module, used to send the changed CSG information acquired by the acquiring module to a gateway.

The embodiment of the invention provides a gateway, comprising:
a receiving module, used to receive the first message from the mobility management entity, the first message carrying the changed CSG information of the UE.

The embodiment of the invention provides a method for sending CSG information of a UE, comprising:
when the CSG information of a UE changes, a mobility management entity acquires the changed CSG information of the UE;
the mobility management entity sends the changed CSG information to a PCRF entity, which charges the UE according to the changed CSG information of the UE.

The embodiment of the invention provides a method for sending CSG information, comprising:
when the CSG information of a UE changes, a gateway receives the first message from the mobility management entity, the first message carrying the changed CSG information of the UE;
the gateway acquires the changed CSG information of the UE from the first message;
the gateway notifies a PCRF of the changed CSG information of the UE, the PCRF charging the UE according to the changed CSG information of the UE.

The embodiment of the invention provides a system for sending CSG information, comprising:
a mobility management entity, used to acquire the changed CSG information of a UE when the CSG information of the UE changes, and send the changed CSG information to a PCRF;
a gateway, used to receive the first message from the mobility management entity, the first message carrying the changed CSG information of the UE; and acquire the changed CSG information of the UE from the first message, then sending the changed CSG information of the UE message to the PCRF;
a PCRF, used to charge the UE according to the changed CSG information of the UE.

The embodiment of the invention provides a device for sending CSG information, comprising:
an acquiring module, used to acquire the changed CSG information of a UE when the CSG information of the UE changes;
a sending module, used to send the changed CSG information acquired by the acquiring module to a PCRF, which charges the UE according to the changed CSG information of the UE.

The embodiment of the invention provides a gateway, comprising:
a receiving module, used to receive the first message from a mobility management entity, the first message carrying the changed CSG information of the UE;
an acquiring module, used to acquire the changed CSG information of the UE received by the receiving module;
an sending module, used to send the changed CSG information of the UE acquired by the acquiring module to a PCRF, which charges the UE according to the changed CSG information of the UE.

Comparing with existing technology, the embodiment of the invention has at least following advantages: with the changed CSG information carried in the message sent from mobility management entity to the gateway, the PCRF is enabled to get the knowledge of the changed CSG information so as to perform charging according to the changed CSG information, which solves the problem that the CSG information cannot be updated in the gateway.

### BRIEF DESCRIPTION OF THE DRAWINGS

Figure 1 is a flow diagram of reporting process in existing technology when user location changes;
Figure 2 is a flow diagram of a method provided by embodiment 1 of the present invention for sending CSG information;
Figure 3 is a flow diagram of a method provided by embodiment 2 of the present invention for sending CSG information;
Figure 4 is a flow diagram of a method provided by embodiment 3 of the present invention for sending CSG information;
Figure 5 is a structure diagram of a device provided by the embodiment of the invention for sending CSG information;
Figure 6 is a structure diagram of a gateway provided by the embodiment of the invention.

### DETAILED DESCRIPTION OF THE EMBODIMENTS OF THE PRESENT INVENTION

In embodiment of the present invention, with the changed CSG information carried in the message (the message can be chosen freely according to practical demands, for example, the message can be the first message, Change Notification Request etc. Take Change Notification Request for example) sent from mobility management entity to the gateway, the PCRF is enabled to get the knowledge of the changed CSG information so as to perform charging according to the changed CSG information, which solves the problem that the CSG information cannot be updated in the gateway.

The embodiment of the invention provides a method for sending CSG information, referred to FIG. 2, comprising the following steps:
Step 301, when the CSG information of a UE changes, a mobility management entity acquires the changed CSG information of the UE.
Step 302, the mobility management entity sends the changed CSG information to a PCRF, which charges the UE according to the changed CSG information of the UE.

Specifically, the mobility management entity sends the changed CSG information to a PCRF, comprising: the mobility management sending the first message to a gateway, the first message carrying the changed CSG information of the UE, the gateway acquiring the changed CSG information of the UE from the first message, and sending the changed CSG information to the PCRF.

Further, the PCEF function is implemented in the gateway. The gateway acquires the changed CSG information of the UE from the first message, and notifies the PCRF of the changed CSG information to, comprising: the PCEF acquiring the changed CSG information of the UE from the first message, and sending the changed CSG information to the PCRF.

The first message contains the User CSG Information part, and carries the changed CSG information through the User CSG Information part.

Further, before the mobility management entity sends the changed CSG information to a PCRF, the method further comprises: the mobility management entity receiving the second message from the gateway, the second message carrying the information that indicates the mobility management entity to report the changed CSG information when the CSG information of the UE changes.

Before the mobility management entity receives the second message from the gateway, further comprising: the gateway setting the second message, and indicating the mobility management entity to report through the second message when the CSG information of the UE changes.

In the embodiment of the invention, the method applies to 2G/3G system that has H(e)NB deployed, or, EPS that has H(e)NBdeployed. In the 2G/3G system, the mobility management entity is represented by SGSN, the gateway is represented by GGSN; In the EPS, the mobility management entity is represented by MME (Mobility Management Entity), the gateway is represented by PGW.

In the EPS, the mobility management entity sends the first message to a gateway, comprising: the MME sending the first message to SGW; the SGW sending the first message to the PGW.

Hence, according to the method provided by the present invention, with the changed CSG information carried in the message sent from mobility management entity to the gateway, the PCRF is enabled to get the knowledge of the changed CSG information so as to perform charging according to the changed CSG information, which solves the problem that the CSG information cannot be updated in the gateway.

Embodiment 2 of the invention provides a method for sending changed CSG information, the method applying to EPS, therein, User CSG Information based charging has been introduced in EPS in H(e)NB scenario, that is to say, three kinds of User CSG Information change trigger should be added corresponding to different trigger conditions in different H(e)NB cells.

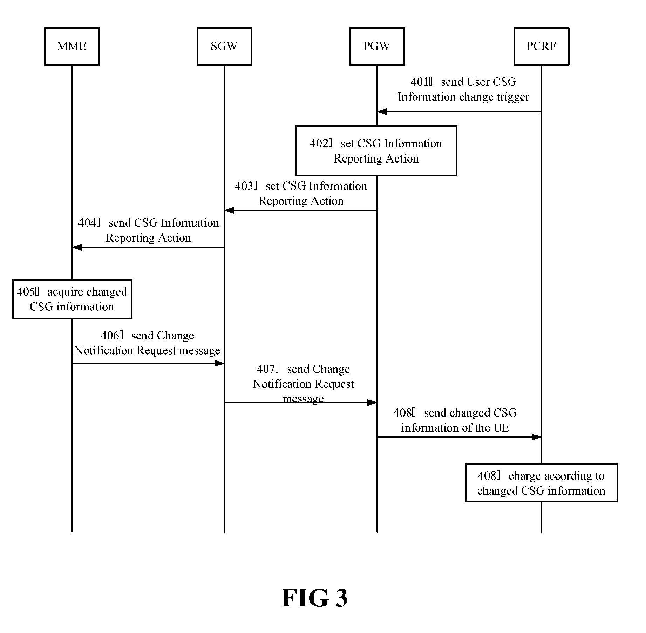

Referred to FIG. 3, the method for sending CSG information contains following steps :
Step 401, a PCRF sends User CSG Information change trigger to gateway. Therein, the gateway in the EPS can be PGW, hereinafter take PGW for example.

Specifically, three kinds of User CSG Information change trigger is added into the process of User CSG Information based charging, in this step, one or any combination of the three kinds of User CSG Information can be sent to PGW, the embodiment of the present invention will not go into detail.
Step 402, the PGW sets CSG Information Reporting Action according to the User CSG Information change trigger. Therein, in this EPS, PCEF is in PGW and implements the function accordingly.

Specifically, in the process of setting CSG Information Reporting Action, CSG Information Reporting Action should be made to inform MME of the information that needs to be reported when the CSG information of a UE changes. Therein, the MME is the mobility management entity in EPS.
Step 403, PGW sends CSG Information Reporting Action to SGW (Serving Gateway).
Step 404, the SGW sends CSG Information Reporting Action to MME.
Step 405, the MME acquires the changed CSG information when the CSG information of a UE changes. The process exists in existing technology, the embodiment of the present invention will not go into detail.
Step 406, the MME sends Change Notification Request message to the SGW, the Change Notification Request message carrying the changed CSG information of the UE.

Specifically, because CSG Information Reporting Action has informed the MME of the information that needs to be reported, in this step, the MME needs to send the changed CSG information of the UE to SGW when the MME finds that the CSG information changes.

In the embodiment of the invention, existing MS Change Notification Request message can be extended to carry the changed CSG information of a UE.

Specifically, a User CSG Information part is added into the extended Change Notification Request message, and the User CSG Information part can be used to show the CSG information of a UE, namely User CSG Information can be used to carry the changed CSG information of a UE.

Referred to table 1, it is a kind of extended User CSG Information. Therein, in table 1, only the User CSG Information part of Change Notification Request message is shown, other parts of Change Notification Request message will not go into the details in the embodiment of the invention.

**table3**

| Information elements | p | Condition/ Comment | IE Type | Ins. |
|---|---|---|---|---|
| ... | ... | .... | ... | ... |
| **User CSG Information** | C | If CSG Information Reporting Action is set accordingly, contains when User CSG Information changes | | |
| ... | ... | .... | ... | ... |

Step 407, SGW sends Change Notification Request message to PGW, the Change Notification Request message carrying the changed CSG information of the UE.
Step 408, PGW sends the changed CSG information of the UE to a PCRF, which charges according to the changed CSG information. Therein, the PGW sends the changed CSG information of the UE to PCRF by PCEF.

Therein, the steps in the embodiment of the invention can be adjusted according to practical demands.

Hence, according to the method provided by the embodiment of the invention, with the changed CSG information carried in the message sent from mobility management entity to the gateway, the PCRF is enabled to get the knowledge of the changed CSG information so as to perform charging according to the changed CSG information, which solves the problem that the CSG information cannot be updated in the gateway.

A method for sending changed CSG information is provided in embodiment 3 of the invention, the method applying to 2G/3G system, therein, User CSG Information based charging has been introduced in EPS in H(e)NB scenario, that is to say, three kinds of User CSG Information change trigger should be added to correspond to user trigger condition in different cells.

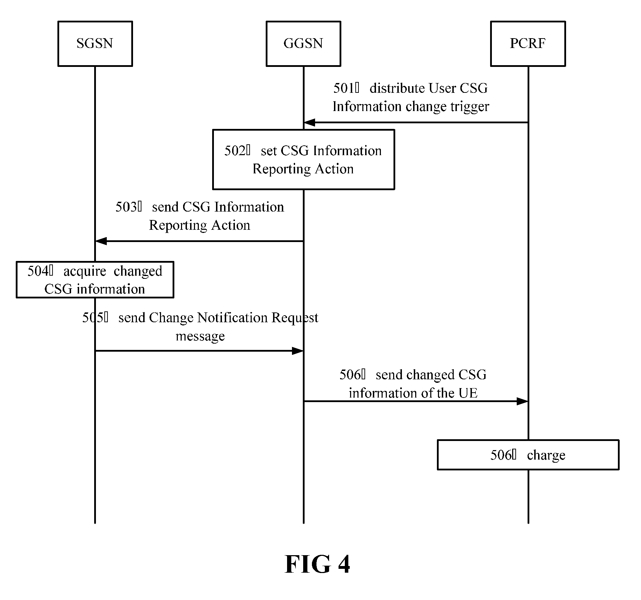

Referred to FIG.4, the method for sending CSG information contains following steps:
Steps 501, PCRF sends User CSG Information change trigger to gateway. Therein, in 2G/3G system, the gateway can be GGSN, hereinafter take the GGSN as example.

Specifically, three kinds of User CSG Information change trigger is added into User CSG Information based charging, in this step, one or any combination of the three kinds of User CSG Information can be sent to PGW, the embodiment of the present invention will not go into detail.
Step 502, GGSN sets CSG Information Reporting Action according to the User CSG Information change trigger. Therein, in this 2G/3G system, PCEF is in GGSN and implements function accordingly.

Specifically, in the process of setting CSG Information Reporting Action, CSG Information Reporting Action should be made to inform SGSN of the information that needs to be reported when CSG information of a UE changes. Therein, SGSN is the mobility management entity in 2G/3G system.
Step 503, GGSN sends CSG Information Reporting Action to SGSN.
Step 504, when CSG information of a UE changes, the SGSN acquires changed CSG information. The process exists in existing technology, the embodiment of the present invention will not go into detail.
Step 505, SGSN sends Change Notification Request message to GGSN, the Change Notification Request message carrying the changed CSG information of the UE.

Specifically, because CSG Information Reporting Action have informed SGSN of the information that needs to be reported, the SGSN needs to send the changed CSG information of a UE to SGW when the SGSN finds that CSG information changes.

In the embodiment of the invention, existing MS Change Notification Request message can be extended, and the extended Change Notification Request message can be made to carry the changed CSG information of a UE.

Specifically, User CSG Information part is added into the extended MS Change Notification Request message, and the User CSG Information part can be used to show the CSG information of a UE, namely User CSG Information can be used to carry the changed CSG information of a UE, referred to FIG.3, a kind of Change Notification Request message is shown.
Step 506, GGSN sends the changed CSG information of a UE to a PCRF, which charges according to the changed CSG information of a UE. Therein, the GGSN sends the changed CSG information of a UE to a PCRF by PCEF.

Therein, the steps in the embodiment of the invention can be adjusted according to practical demands.

Hence, according to the method provided by the embodiment of the invention, with the changed CSG information carried in the message sent from mobility management entity to the gateway, the PCRF is enabled to get the knowledge of the changed CSG information so as to perform charging according to the changed CSG information, which solves the problem that the CSG information cannot be updated in the gateway.

The embodiment of the invention provides a system for sending CSG information, comprising:
A mobility management entity, is used to acquire the changed CSG information of a UE when the CSG information of the UE changes, and sends the changed CSG information to a gateway.

A PCRF, is used to charge the UE according to the changed CSG information of the UE.

Further, the system also comprises:
A gateway, is used to receive first message from the mobility management entity, the first message carrying the changed CSG information of the UE, and acquire the changed CSG information of the UE from the first message, then send the changed CSG information of the UE message to the PCRF.

Therein, the PCEF function is implemented in the gateway, the gateway is also used to: acquire the changed CSG information of the UE from the first message, and sends the changed CSG information to the PCRF by the PCEF.

Specifically, the first message contains the User CSG Information part, and carries the changed CSG information through the User CSG Information part.

In the embodiment of the invention, the mobility management entity is also used to, receive the second message from the gateway, the second message carrying the information that indicates the mobility management entity to report changed CSG information when the CSG information of the UE changes.

Correspondingly, the gateway is also used to: set the second message, and through the second message indicates the mobility management entity to report when the CSG information of the UE changes.

Further, this system can be 2G/3G system that has H(e)NB deployed, or EPS that has H(e)NB deployed. In the 2G/3G system, the mobility management entity contains SGSN, the gateway contains GGSN; in the EPS, the mobility management entity contains PGW, the gateway contains PGW.

Hence, according to the system provided by the present invention, with the changed CSG information carried in the message sent from mobility management entity to the gateway, the PCRF is enabled to get the knowledge of the changed CSG information so as to perform charging according to the changed CSG information, which solves the problem that the CSG information cannot be updated in the gateway.

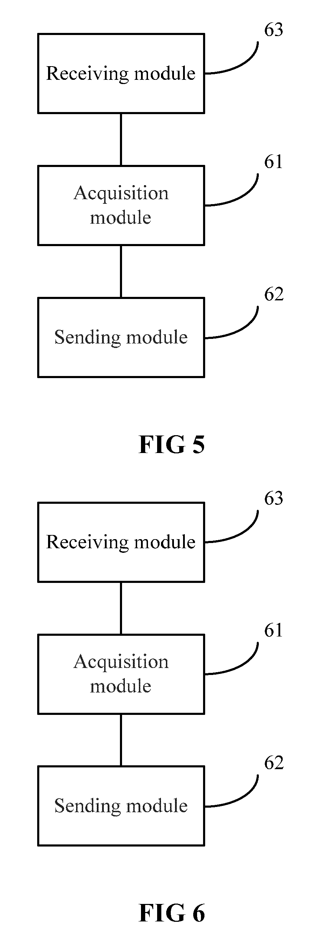

The embodiment of the invention also provides a device for sending CSG information, referred to FIG.5, comprising:
acquiring module 61, used to acquire the changed CSG information of a UE when the CSG information of the UE changes;
sending module 62, used to send the changed CSG information acquired by the acquiring module 61 to a PCRF, which charges the UE according to the changed CSG information of the UE.

The sending module 62, specifically used to, send the first message to a gateway, the first message carrying the changed CSG information of the UE; the gateway acquiring the changed CSG information of the UE from the first message, and sending the changed CSG information to the PCRF.

The first message contains the User CSG Information part, and carries the changed CSG information of the UE through the User CSG Information part.

Further, the device also comprises:
receiving module 63, used to receive the second message from the gateway, the second message carrying the information that indicates the mobility management entity to report the changed CSG information when the CSG information of the UE changes.

In the embodiment of the invention, the device applies to 2G/3G system that has H(e)NB deployed, or, EPS that have H(e)NB deployed. In the 2G/3G system, the mobility management entity is represented by SGSN, the gateway device is represented by GGSN; in the EPS, the mobility management entity is represented by PGW, the gateway device is represented by PGW.

Therein, the modules of the device provided by the present invention can be integrated in one, or deployed separately. The module can be merged into one module, or be split to several sub-module.

Through adopting the device provided by the present invention, with the changed CSG information carried in the message sent from mobility management entity to the gateway, the PCRF is enabled to get the knowledge of the changed CSG information so as to perform charging according to the changed CSG information, which solves the problem that the CSG information cannot be updated in the gateway.

The embodiment of the invention also provides a kind of gateway device, referred to FIG 6, comprising:
receiving module 71, used to receive the first message from the mobility management entity when CSG information of a UE changes, the first message carrying the changed CSG information of the UE.
acquiring module 72, used to acquire the changed CSG information of the UE from the first message received by the receiving module 71.
sending module 73, used to send the changed CSG information of the UE acquired by the acquiring module 71 to a PCRF, the PCRF charges the UE according to the changed CSG information of the UE.

In the embodiment of the invention, the PCEF function is implemented in the gateway
the acquiring module 72, specifically used to acquire the changed CSG information of the UE from the first message through the PCEF;
the sending module 73 being specifically used to, send the changed CSG information to the PCRF through the PCEF;
the first message containing the User CSG Information part, and carrying the changed CSG information through the User CSG Information part.

Specifically, the sending module 73, is also used to, set the second message, the second message carrying the information that indicates the mobility management entity to report the changed CSG information when the CSG information of the UE changes; send the second message to the mobility management entity.

Therein, the modules of the device provided by the present invention can be integrated in one, or deployed separately. The modules can be merged into one module, or be split to several sub-module.

Through adopting the device provided by the present invention, with the changed CSG information carried in the message sent from mobility management entity to the gateway, the PCRF is enabled to get the knowledge of the changed CSG information so as to perform charging according to the changed CSG information, which solves the problem that the CSG information cannot be updated in the gateway.

Through the description of the embodiments above, the technical personnel in this field can understand clearly that the present invention can be implemented by software and necessary current hardware platform. Of course, it also can be implemented by hardware, but in many situations the former is the better. Based on this understanding, essence or section with contribution to existing technology of the technical program of the present invention can be embodied by a form of software product which can be stored in a storage medium, comprising a number of instructions for making a computer equipment (such as mobile phone, personal computers, servers, or network equipments, etc.) implement the methods described in the embodiments of the present invention.

The technical personnel in this field can understand that drawing is diagram of only one embodiment, the unit or process of drawing is not necessarily for implementing the present invention.

The technical personnel in this field can understand the modules of the equipments in the embodiments can be set in the equipments according to the description of the embodiments, also can be set in one or more equipments different from the embodiments. Modules in the above-mentioned embodiments can be integrated in one entirety, also can be deployed separately, can be combined into one module, also can be further split into multiple sub-modules.

Serial numbers of the above-mentioned embodiments of the present invention are only used for description, it does not express whether the embodiment is excellent or poor.

The scope of protection for the invention is not just limited to the stated embodiments. As long as those skilled in the art make an improvement without any creativity according to the invention, it should be within the scope of protection.

## Claims

1. A method for sending CSG information, wherein, comprising:
when the CSG information of a User Equipment (UE) changes, a mobility management entity acquiring the changed CSG information of the UE;
the mobility management entity sending the changed CSG information to a gateway.

2. The method as claimed in claim 1, wherein, the mobility management entity sending the changed CSG information of the UE to the gateway by the first message with the User CSG Information part, the User CSG Information part being used to carry the changed CSG information of the UE.

3. The method as claimed in claim 1 or claim 2, wherein, before the mobility management entity sends the changed CSG information of the UE to the gateway, further comprising:
the mobility management entity receiving the second message from the gateway, the second message carrying the information that indicates the mobility management entity to report the changed CSG information when the CSG information of the UE changes.

4. A method for sending CSG information, wherein, comprising:
when the CSG information of a UE changes, a gateway receiving the first message from the mobility management entity, the first message carrying the changed CSG information of the UE.

5. The method as claimed in claim 4, wherein, the first message containing the User CSG Information part, and the changed CSG information of the UE being carried by the first message through the User CSG Information part.

6. The method as claimed in claim 4 or claim 5, wherein, before the gateway receives the first message from the mobility management entity, further comprising:
the gateway setting the second message, the second message carrying the information that indicates the mobility management entity to report the changed CSG information when the CSG information of the UE changes;
the gateway sending the second message to the mobility management entity.

7. A system for sending CSG information, wherein, comprising:
a mobility management entity, used to acquire the changed CSG information of a UE when the CSG information of the UE changes, and sending the changed CSG information to a gateway;
a gateway, used to receive the first message from the mobility management entity, the first message carrying the changed CSG information of the UE.

8. A device for sending CSG information: wherein, comprising:
an acquiring module, used to acquire changed CSG information of a UE when the CSG information of the UE changes;
a sending module, used to send the changed CSG information acquired by the acquiring module to a gateway.

9. The device as claimed in claim 8, wherein, further comprising:
a receiving module, used to receive the second message from the gateway, the second message carrying the information that indicates the mobility management entity to report changed CSG information when the CSG information of the UE changes.

10. A gateway, wherein, comprising:
a receiving module, used to receive the first message from the mobility management entity, the first message carrying the changed CSG information of the UE.

11. The gateway as claimed in claim 10, wherein, further comprising:
a sending module, used to set the second message, the second message carrying the information that indicates the mobility management entity to report the changed CSG information when the CSG information of the UE changes; sending the second message to the mobility management entity.

12. A method for sending CSG information, wherein, comprising:
when the CSG information of a UE changes, a mobility management entity acquiring the changed CSG information of the UE;
the mobility management entity sending the changed CSG information to a Policy and Charging Rules Function entity (PCRF), which charges the UE according to the changed CSG information of the UE.

13. The method as claimed in claim 12, wherein, the mobility management entity sending the changed CSG information to a PCRF, comprising:
the mobility management entity sending the first message to the gateway, the first message carrying the changed CSG information of the UE, the gateway acquiring the changed CSG information of the UE from the first message and notifying the PCRF of the changed CSG information.

14. The method as claimed in claim 12 or 13, wherein, before the mobility management entity sends the changed CSG information to a PCRF, further comprising:
the mobility management entity receiving second message from the gateway, the second message carrying the information that indicates the mobility management entity to report the changed CSG information when the CSG information of the UE changes.

15. A method for sending CSG information, wherein, comprising:
when the CSG information of a UE changes, a gateway receiving the first message from the mobility management entity, the first message carrying the changed CSG information of the UE;
the gateway acquiring the changed CSG information of the UE from the first message;
the gateway notifying a PCRF of the changed CSG information, the PCRF charging the UE according to the changed CSG information of the UE.

16. The method as claimed in claim 15, wherein, PCEF function being implemented in the gateway;
the gateway accomplishing the operation that acquiring the changed CSG information of the UE from the first message and notifying the PCRF of the changed CSG information by the PCEF.

17. The method as claimed in claim 15 or 16, wherein, before the gateway receives the first message from the mobility management entity, further comprising:
the gateway setting the second message, the second message carrying the information that indicates the mobility management entity to report the changed CSG information when the CSG information of the UE changes;
the gateway sending the second message to the mobility management entity.

18. A system for sending CSG information, wherein, comprising:
a mobility management entity, used to acquire the changed CSG information of a UE when the CSG information of the UE changes, and sending the changed CSG information to a PCRF.
a gateway, used to receive the first message from the mobility management entity, the first message carrying the changed CSG information of the UE; and acquiring the changed CSG information of the UE from the first message, then sending the changed CSG information to the PCRF.
a PCRF, used to charge the UE according to the changed CSG information of the UE.

19. A device for sending CSG information: wherein, comprising:
an acquiring module, used to acquire the changed CSG information of the UE when the CSG information of the UE changes;
a sending module, used to send the changed CSG information acquired by the acquiring module to a PCRF, which charges the UE according to the changed CSG information of the UE.

20. The device as claimed in claim 19, wherein,
the sending module being specifically used to, send the first message to the gateway, the first message carrying the changed CSG information of the UE; the gateway acquiring the changed CSG information of the UE from the first message, and sending the changed CSG information to the PCRF.

21. The device as claimed in claim 19 or 20, wherein, further comprising:
a receiving module, used to receive the second message from the gateway, the second message carrying the information that indicates the mobility management entity to report the changed CSG information when the CSG information of the UE changes.

22. A gateway, wherein, comprising:
a receiving module, used to receive the first message from the mobility management entity, the first message carrying the changed CSG information of the UE.
an acquiring module, used to acquire the changed CSG information of the UE acquired by the receiving module;
a sending module, used to send the changed CSG information of the UE acquired by the acquiring module to a PCRF, which charges the UE according to the changed CSG information of the UE.

23. The gateway as claimed in claim 22, wherein, further comprising:
the sending module being further used to, set second message, the second message carrying the information that indicates the mobility management entity to report the changed CSG information when the CSG information of the UE changes; send the second message to the mobility management entity.
